# EUROPEAN PATENT APPLICATION

(11) **EP 1 939 014 A2**
(43) Date of publication of application: **02.07.2008**
(21) Application number: 07023133.7
(22) Date of filing: 29.11.2007
(51) Int. Cl.: B60C 1/00, C08K 3/04, C08K 3/36, C08L 7/00

(54) **Method of production of rubber composition for tire**

(30) Priority: 01.12.2006 JP 2006325595
(71) Applicant: The Yokohama Rubber Co., Ltd., Minato-ku Tokyo 105-8685 (JP)
(72) Inventor: Inoue, Yoshihisa, 2-1, Oiwake Hiratsuka-shi Kanagawa 254-8601 (JP)
(74) Representative: HOFFMANN EITLE

(57) **Abstract**

A method for producing a rubber composition for a tire by compounding, at a first mixing step, into 50 parts by weight or more of 100 parts by weight of a diene-based rubber containing 50 parts by weight of natural rubber and/or synthetic polyisoprene rubber and 50 parts by weight or less of a butadiene rubber, 5 to 30 parts by weight of silica and 3 to 15% by weight of a silane coupling agent, based upon the weight of silica, to form a master batch, then, at a second mixing step, adding, to the resultant master batch, the balance of diene-based rubber and carbon black and other compounding agents, except for the vulcanization compounding agents, and finally, at a final mixing step, adding thereto the vulcanization compounding agents.

## Description

### TECHNICAL FIELD

The present invention relates to a method for preparing a silica-containing rubber composition for a tire having a superior chipping resistance, more specifically relates to a method for producing a silica-containing rubber composition for a tire having a greatly improved processability and chipping resistance.

### BACKGROUND ART

In the past, in, for example, cap treads and base treads of commercial tires for driving on off roads, silica has been used to improve the chipping resistance performance. Further, silica has been compounded so as to decrease the fuel consumption even for driving mainly on on roads. However, in general, when silica is compounded into a rubber composition for a tire, the viscosity becomes higher and the factory processability becomes a concern. Therefore, processing aids such as A-50P (brand name) are being used, but there is the problem that the properties at break required for chipping resistance is decreased.

In the past, as the technology for efficiently dispersing silica in a rubber composition, 1) the method of mixing the rubber and silica by mixing divided portions of the rubber component (see Japanese Patent Publication (A) No. 2003-335901), 2) the method of, at a first mixing step, mixing the entire amount of the rubber component and the compounding agents such as silica, carbon black, silane coupling agent, polysiloxane and, at a second mixing step, adding thereto and mixing therewith the other compounding agents, such as zinc oxide, stearic acid, wax, antioxidant, and finally, at a final step, adding thereto and mixing therewith vulcanization system compounding agents such as sulfur and the vulcanization accelerator (see Japanese Patent Publication (A) No. 2002-220492 and 3) the method of, at first mixing step, mixing a part of the rubber component and the compounding agents other than the vulcanization system compounding agents so as to obtain a rubber master batch, at a second mixing step, mixing said master batch and the balance of the rubber component, and, at a final mixing step, adding thereto and mixing therewith the vulcanization system compounding agents (see Japanese Patent Publication (A) No. 2006-36918) have been known.

### DISCLOSURE OF THE INVENTION

The object of the present invention is to provide a method for producing a rubber composition for a tire wherein a multistage mixing process using a master batch of silica is used, whereby the dispersibility of the silica in the rubber is improved, and, therefore, even without using a processing aid, the viscosity is decreased, the processability is improved, the elongation at break of the rubber is improved and the chipping resistance of the tire is improved.

In accordance with the present invention, there is provided a method for producing a rubber composition for a tire comprising: compounding at a first mixing step, into 50 parts by weight or more of 100 parts by weight of a diene-based rubber containing 50 parts by weight or more of natural rubber (NR) and/or synthetic polyisoprene rubber (IR) and 50 parts by weight or less of a butadiene rubber (BR), 5 to 30 parts by weight of silica and 3 to 15% by weight of a silane coupling agent, based upon the weight of the silica with mixing to form a master batch, adding thereto, at a second mixing step, to the resultant master batch, the balance of the diene-based rubber and carbon black and optional compounding agents, except for the vulcanization compounding agents, and then, adding thereto, at a final mixing, step the vulcanization compounding agents, with mixing.

In accordance with the present invention, there is also provided a rubber composition for a tire further comprising, the final mixing step, compounding a cross-linking agent for introducing carbon-carbon bonds to the cross-linked structure of the rubber so as to improve the properties at break and further improve the chipping resistance from the start to the end of the driving life. BEST MODE FOR CARRYING OUT THE INVENTION

In the present invention, the inventors found that, even if not using the conventional divided mixing method or the conventional technique using a processing aid, when, first, at the first mixing step, a silica master batch is obtained from all or part of the predetermined rubber component and silica and a silane coupling agent, and then, at the next second mixing step, the balance (or remainder) of the rubber and compounding agents except for the required vulcanization compounding agents is added, and, finally, at the final mixing step, the vulcanization compounding agents is added, a rubber composition for a tire superior in processability and superior in chipping resistance of the tire can be obtained. Further, in the present invention, the inventors found that by further compounding a cross-linking agent for introducing carbon-carbon bonds into the cross-linked structure of the rubber at the final mixing step, the heat aging resistance can be improved and the chipping resistance can be further improved.

In the production method of a rubber composition for a tire according to the present invention, as first mixing step, all or part of the predetermined rubber component and a predetermined silica and silane coupling agent and, if necessary, peptizer are charged into an internal mixer such as a Banbury mixer or kneader, the mixing is started from room temperature, the mixing is carried out at a temperature of 90 to 160°C for 30 to 300 seconds, then is discharged and allowed to cool to room temperature to obtain a predetermined silica master batch. Thereafter, in the second mixing step, the silica master batch, the remainder of the rubber component and the carbon black and other predetermined compounding agents, except for the vulcanization compounding agents are charged from the charging port of the internal mixer, the mixing is started from room temperature, the mixing is carried out at a temperature of 130 to 160°C for 30 to 300 seconds, then is discharged and allowed to cool to room temperature. Next, an open roll is used to add the vulcanization compounding agents and, if necessary, a predetermined cross-linking agent and the mixing is carried out at a temperature of 90 to 110°C for 30 to 300 seconds to obtain the desired rubber composition.

As the rubber component used for the rubber composition for a tire of the present invention, a diene-based rubber containing natural rubber (NR) and/or synthetic polyisoprene rubber (IR) in an amount of at least 50 parts by weight or more, preferably 55 parts by weight or more, and butadiene rubber (BR) in an amount of 50 parts by weight or less, preferably 45 parts by weight or less, is used. The rubber component may also be entirely (i.e., 100 parts by weight) natural rubber and/or synthetic polyisoprene rubber. Further, if the predetermined amount of butadiene rubber is compounded, the tire fuel economy and the abrasion resistance can be preferably improved. In the first mixing step, to obtain good dispersion of the silica in the rubber and to obtain a low viscosity master batch, it is necessary to mix at least 50 parts by weight or more of 100 parts by weight of the diene-based rubber and the predetermined amounts of silica and a silane coupling agent, etc. to thereby obtain a silica master batch. Further, as the diene-based rubber usable other than the natural rubber, synthetic polyisoprene rubber and butadiene rubber, styrenebutadiene rubber (SBR) and butyl rubber (IIR), etc. may be mentioned. As the compounding amount, less than 30 parts by weight, preferably 25 parts by weight or less, may be compounded. If the compounding amount is 30 parts by weight or more, the heat buildup resistance unpreferably deteriorates.

As the silica usable for the rubber composition for a tire of the present invention, any silica having a nitrogen adsorption specific surface area N₂SA (measured according to JIS K 6217) of 100 to 300 m²/g, preferably 120 to 200 m²/g, may be used. If the N₂SA of the silica is less than 100 m²/g, the reinforcing effect becomes unpreferably small, contrary to this if more than 300 m²/g, the surface area becomes too large and the dispersion into the rubber becomes difficult, and, therefore, this is not preferred either.

Further, as the silane coupling agent usable in the rubber composition for a tire of the present invention, for example, 3-mercaptopropyl trimethoxysilane, bis-[3-(triethoxysilyl)propyl] tetrasulfide, bis-[3-(triethoxysilyl)propyl] dislfide, 3-trimethoxysilylpropyl-N,N-dimethylthiocarbamoyltetrasulfide, trimethoxysilylpropylmercaptobenzothiazole-tetrasulfide, triethoxysilylpropylmethacrylate-monosulfide and dimethoxysilylpropyl-N,N-dimethylthiocarbamoyl-tetrasulfide, etc. may be mentioned.

In the first mixing step of the present invention, the compounding amount of the silica is 5 to 30 parts by weight, preferably 8 to 20 parts by weight, of silica, based upon 100 parts by weight of a predetermined diene-based rubber, while the compounding amount of the silane coupling agent is an amount of 3 to 15% by weight of the weight of the silica. If the compounding amount of the silica is less than 5 parts by weight, the desired reinforcability and chipping resistance cannot be obtained, while conversely if more than 30 parts by weight, the processability becomes unpreferably poor. Further, the compounding amount of the silane coupling agent to this extent is preferable in improving the dispersion of the silica.

Further, in the production of the rubber composition for a tire of the present invention, at the time of the final mixing, use, together with the other vulcanization compounding agents, of a cross-linking agent for introducing carbon-carbon bond in an amount of 0.1 to 5.0 parts by weight, based upon 100 parts by weight of the rubber component, can improve the anti heat aging property of the tire and improve the chipping resistance more, and therefore, is preferable. If the compounding amount of the cross-linking agent is less than 0.1 part by weight, the desired effect cannot be unpreferably obtained, while conversely if more than 5 parts by weight, the hardness of the rubber becomes too high and conversely the chipping resistance deteriorates, and, therefore, this is not preferred either.

As the cross-linking agent, for example, a compound having the chemical formula:
(C₆H₅-CH₂)₂-N-(C=S)-S-S-(CH₂)₆-S-S-(C=S)-N(CH₂-C₆H₅)₂,
a cyclic polysulfide of the general formula: 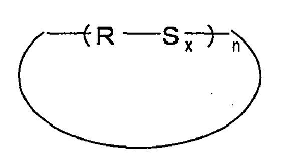
wherein R indicates -(CH₂)₂O(CH₂)O(CH₂)₂- or -(CH₂)₆-, x is 2 to 6, and n is 1 to 20,
etc. may be effectively used.

In the rubber composition for a tire of the present invention, at the second mixing step, the general compounding agents, other than the vulcanization compounding agents and the cross-linking agent, fillers such as the carbon black, zinc oxide, stearic acid, antioxidants, process oil, etc. may be mixed in all together.

### EXAMPLES

Examples will now be used to further illustrate the present invention, but the scope of the present invention is not limited to these Examples, of course.

### Examples 1 to 18 and Comparative Examples 1 to 12

In each of the formulations shown in the following Tables I to III, the ingredients of the first mixing step were charged into a 1.7 liter internal Banbury mixer, were started to be mixed from the room temperature, were mixed at a temperature of 130 to 160°C for 30 to 120 seconds, then were discharged and allowed to stand until reaching room temperature. Next, the entire amount of the silica master batch thus obtained was returned to the Banbury mixer, the ingredients of the second mixing step shown in the Tables were charged, were started to be mixed from room temperature, were mixed at a temperature of 140 to 160°C for 30 to 120 seconds, then were discharged and allowed to stand until reaching the room temperature. Next, the entire amount of the rubber thus obtained was charged into an open roll and the ingredients of the final mixing step were added to obtain the rubber composition of each Example. A part of the rubber composition was left as a sample for measurement of the viscosity (i.e., Mooney viscosity). The resultant rubber composition was placed in a 15cm x 15cm x 0.2cm mold and was press vulcanized at 160°C for 20 minutes to prepare a test piece (i.e., rubber sheet). This was used for the tests of the elongation at break of the following test methods (2) and (3).

### Test Methods

(1) Mooney viscosity: According to JIS K 6300, a Mooney viscometer was used to determine the viscosity using an L-type rotor (38.1 mm diameter, 5.5 mm thickness) under conditions of a preheat time of 1 minute, a rotor operating time of 4 minutes, 100°C, and 2 rpm. The results were indicated as indexed to the values of Comparative Examples 1, 5, and 9 as 100. The larger the index (i.e., the lower the viscosity), the better the processability is judged.
(2) Elongation at break: According to JIS K 6251, a 2 mm sheet was punched into No. 3 Dumbbells. These test pieces were used for determining the elongation at break by a 500 mm/min tensile speed. The results were indicated as indexed to the values of Comparative Examples 1, 5, and 9 as 100. The larger the index (i.e., the larger the elongation at break), the better the chipping resistance is judged.
(3) Elongation at break after aging: According to JIS K 6251, a 2 mm sheet was punched into No. 3 Dumbbells. These test pieces were stored in a sealed container at a temperature of 100°C for 2 days for aging, then were used for determining the elongation at break by a 500 mm/min tensile speed. The results were indicated as indexed to the values of Comparative Examples 1, 5, and 9 as 100. The larger the index (i.e., the larger the elongation at break), the better the chipping resistance after heat aging is judged.

The results are shown in the following Tables I to III.

**Table I**

| | Comp. Ex. 1 | Comp. Ex. 2 | Comp. Ex. 3 | Ex. 1 | Ex. 2 | Comp. Ex. 4 | Ex. 3 | Ex. 4 | Ex. 5 | Ex. 6 |
|---|---|---|---|---|---|---|---|---|---|---|
| First mixing step | | | | | | | | | | |
| Natural rubber¹⁾ | 100 | 100 | 100 | 100 | 100 | 100 | 100 | 100 | 50 | 50 |
| Silica⁴⁾ | - | - | 3 | 10 | 20 | 40 | 10 | 10 | 10 | 10 |
| Silane coupling agent⁵⁾ | - | - | 0.16 | 0.8 | 1.6 | 3.2 | 0.8 | 0.8 | 0.8 | 0.8 |
| Peptizer⁶⁾ | 0.1 | 0.1 | 0.1 | 0.1 | 0.1 | 0.1 | 0.1 | 0.1 | 0.1 | 0.1 |

| Second mixing step | | | | | | | | | | |
|---|---|---|---|---|---|---|---|---|---|---|
| Natural rubber¹⁾ | - | - | - | - | - | - | - | - | 50 | 50 |
| Carbon black⁷⁾ | 40 | 40 | 40 | 40 | 30 | 10 | 40 | 40 | 40 | 40 |
| Silica⁴⁾ | 10 | 10 | - | - | - | - | - | - | - | - |
| Zinc oxide⁸⁾ | 3 | 3 | 3 | 3 | 3 | 3 | 3 | 3 | 3 | 3 |
| Stearic acid⁹⁾ | 2 | 2 | 2 | 2 | 2 | 2 | 2 | 2 | 2 | 2 |
| Processing aid¹⁰⁾ | 2 | - | - | - | - | - | - | - | - | - |
| Antioxidant¹¹⁾ | 1 | 1 | 1 | 1 | 1 | 1 | 1 | 1 | 1 | 1 |
| Gum rosin¹²⁾ | 2 | 2 | 2 | 2 | 2 | 2 | 2 | 2 | 2 | 2 |

| Final mixing step | | | | | | | | | | |
|---|---|---|---|---|---|---|---|---|---|---|
| Vulcanization accelerator¹³⁾ | 2 | 2 | 2 | 2 | 2 | 2 | 2 | 2 | 2 | 2 |
| Cross-linking agent 1¹⁴⁾ | - | - | - | - | - | - | 1 | - | - | 1 |
| Cross-linking agent 2¹⁵⁾ | - | - | - | - | - | - | - | 1 | - | - |
| Sulfur¹⁶⁾ | 1 | 1 | 1 | 1 | 1 | 1 | 1 | 1 | 1 | 1 |

| Physical properties | | | | | | | | | | |
|---|---|---|---|---|---|---|---|---|---|---|
| Mooney viscosity (index) | 100 | 88 | 97 | 104 | 106 | 82 | 103 | 104 | 102 | 102 |
| Elongation at break (index) | 100 | 112 | 94 | 126 | 122 | 84 | 124 | 128 | 124 | 121 |
| Elongation at break after | 100 | 108 | 92 | 128 | 128 | 82 | 146 | 139 | 125 | 145 |
| heat aging(index) | | | | | | | | | | |

**Table II**

| | Comp. Ex. 5 | Comp. Ex. 6 | Comp. Ex. 7 | Ex. 7 | Ex. 8 | Comp. Ex. 8 | Ex. 9 | Ex. 10 | Ex. 11 | Ex. 12 |
|---|---|---|---|---|---|---|---|---|---|---|
| First mixing step | | | | | | | | | | |
| Natural rubber¹⁾ | 60 | 60 | 60 | 60 | 60 | 60 | 60 | 60 | 60 | 60 |
| BR²⁾ | 40 | 40 | 40 | 40 | 40 | 40 | 40 | 40 | - | - |
| Silica⁴⁾ | - | - | 3 | 10 | 20 | 40 | 20 | 20 | 10 | 10 |
| Silane coupling agent⁵⁾ | - | - | 0.16 | 0.8 | 1.6 | 3.2 | 1.6 | 1.6 | 0.8 | 0.8 |
| Peptizer⁶⁾ | 0.1 | 0.1 | 0.1 | 0.1 | 0.1 | 0.1 | 0.1 | 0.1 | 0.1 | 0.1 |

| Second mixing step | | | | | | | | | | |
|---|---|---|---|---|---|---|---|---|---|---|
| BR²⁾ | - | - | - | - | - | - | - | - | 40 | 40 |
| Carbon black⁷⁾ | 30 | 30 | 45 | 40 | 30 | 10 | 30 | 30 | 40 | 40 |
| Silica⁴⁾ | 20 | 20 | - | - | - | - | - | - | - | - |
| Silane coupling agent⁵⁾ | 1.6 | 1.6 | - | - | - | - | - | - | - | - |
| Zinc oxide⁸⁾ | 3 | 3 | 3 | 3 | 3 | 3 | 3 | 3 | 3 | 3 |
| Stearic acid⁹⁾ | 2 | 2 | 2 | 2 | 2 | 2 | 2 | 2 | 2 | 2 |
| Processing aid¹⁰⁾ | 2 | - | - | - | - | - | - | - | - | - |
| Antioxidant¹¹⁾ | 1 | 1 | 1 | 1 | 1 | 1 | 1 | 1 | 1 | 1 |

| Final mixing step | | | | | | | | | | |
|---|---|---|---|---|---|---|---|---|---|---|
| Vulcanization accelerator¹³⁾ | 2 | 2 | 2 | 2 | 2 | 2 | 2 | 2 | 2 | 2 |
| Cross-linking agent 1¹⁴⁾ | - | - | - | - | - | - | 1 | - | - | - |
| Cross-linking agent 2¹⁵⁾ | - | - | - | - | - | - | - | 1 | - | 1 |
| Sulfur¹⁶⁾ | 1 | 1 | 1 | 1 | 1 | 1 | 1 | 1 | 1 | 1 |

| Physical properties | | | | | | | | | | |
|---|---|---|---|---|---|---|---|---|---|---|
| Mooney viscosity (index) | 100 | 84 | 96 | 102 | 105 | 80 | 104 | 102 | 101 | 102 |
| Elongation at break (index) | 100 | 110 | 92 | 123 | 122 | 84 | 122 | 126 | 121 | 125 |
| Elongation at break after | 100 | 114 | 90 | 127 | 128 | 80 | 145 | 137 | 124 | 134 |
| aging (index) | | | | | | | | | | |

**Table III**

| | Comp. Ex. 9 | Comp. Ex. 10 | Comp. Ex. 11 | Ex. 13 | Ex. 14 | Comp. Ex. 12 | Ex. 15 | Ex. 16 | Ex. 17 | Ex. 18 |
|---|---|---|---|---|---|---|---|---|---|---|
| First mixing step | | | | | | | | | | |
| Natural rubber¹⁾ | 60 | 60 | 60 | 60 | 60 | 60 | 60 | 60 | 60 | 60 |
| BR²⁾ | 20 | 20 | 20 | 20 | 20 | 20 | 20 | 20 | - | - |
| SBR³⁾ | 20 | 20 | 20 | 20 | 20 | 20 | 20 | 20 | - | - |
| Silica⁴⁾ | - | - | 3 | 10 | 20 | 40 | 20 | 20 | 10 | 10 |
| Silane coupling agent⁵⁾ | - | - | 0.16 | 0.8 | 1.6 | 3.2 | 1.6 | 1.6 | 0.8 | 0.8 |
| Peptizer⁶⁾ | 0.1 | 0.1 | 0.1 | 0.1 | 0.1 | 0.1 | 0.1 | 0.1 | 0.1 | 0.1 |

| Second mixing step | | | | | | | | | | |
|---|---|---|---|---|---|---|---|---|---|---|
| BR²⁾ | - | - | - | - | - | - | - | - | 20 | 20 |
| SBR³⁾ | - | - | - | - | - | - | - | - | 20 | 20 |
| Carbon black⁷⁾ | 30 | 30 | 45 | 40 | 30 | 10 | 30 | 40 | 40 | 40 |
| Silica⁴⁾ | 20 | 20 | - | - | - | - | - | - | - | - |
| Silane coupling agent⁵⁾ | 1.6 | 1.6 | - | - | - | - | - | - | - | - |
| Zinc oxide⁸⁾ | 3 | 3 | 3 | 3 | 3 | 3 | 3 | 3 | 3 | 3 |
| Stearic acid⁹⁾ | 2 | 2 | 2 | 2 | 2 | 2 | 2 | 2 | 2 | 2 |
| Processing aid¹⁰⁾ | 2 | - | - | - | - | - | - | - | - | - |
| Antioxidant¹¹⁾ | 1 | 1 | . 1 | 1 | 1 | 1 | 1 | 1 | 1 | 1 |

| Final mixing step | | | | | | | | | | |
|---|---|---|---|---|---|---|---|---|---|---|
| Vulcanization accelerator¹³⁾ | 2 | 2 | 2 | 2 | 2 | 2 | 2 | 2 | 2 | 2 |
| Cross-linking agent 1¹⁴⁾ | - | - | - | - | - | - | 1 | - | - | 1 |
| Cross-linking agent 2¹⁵⁾ | - | - | - | - | - | - | - | 1 | - | - |
| Sulfur¹⁶⁾ | 1 | 1 | 1 | 1 | 1 | 1 | 1 | 1 | 1 | 1 |

| Physical properties | | | | | | | | | | |
|---|---|---|---|---|---|---|---|---|---|---|
| Mooney viscosity (index) | 100 | 86 | 92 | 103 | 108 | 76 | 102 | 101 | 101 | 101 |
| Elongation at break (index) | 100 | 109 | 90 | 118 | 124 | 88 | 121 | 123 | 116 | 118 |
| Elongation at break after | 100 | 110 | 88 | 129 | 124 | 82 | 146 | 138 | 130 | 146 |
| aging (index) | | | | | | | | | | |

As the 1) to 16) of the above Tables I to III, the following were used.
1): STR20
2): Nipol BR1220 (made by Nippon Zeon)
3): Nipol 1502 (made by Nippon Zeon)
4): Nipsil AQ (made by Toso-Silica)
5): Si69 (made by Degussa)
6): Noctizer SD (made by Ouchi Shinko Chemical Industrial Co., Ltd.) 7): Shoblack N234 (made by Cabot Japan)
8): Zinc Oxide No. 3 (made by Seido Chemical Industry Co., Ltd.)
9): Beads Stearic Acid (made by NOF Corporation)
10): STRUCTOL A50P (made by SCHILL & SEILACHER Gmbh. & CO.)
11): Antigen 6C (made by Sumitomo Chemical)
12): Chinese Rosin WW (made by Arakawa Chemical Industries, Ltd.) 13): SANTOCURE TBBS (made by FLEXSYS)
14): Vulcren KA9188 (made by BAYER)

   (C₆H₅-CH₂)₂N-(C=S)-S-S-(CH₂)₆-S-S-(C=S)-N(CH₂-C₆H₅)₂
15): Cyclic polysulfide of formula (I): 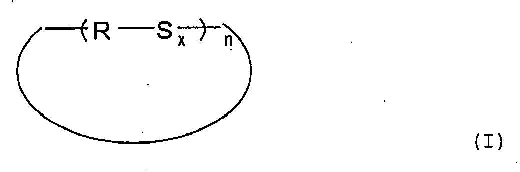 wherein R indicates -(CH₂)₂O(CH₂)O(CH₂)O(CH₂)₂- or -(CH₂)₆-, x is 2 to 6, and n is 1 to 20
16): "Golden Flower" oil-treated sulfur powder (made by Tsurumi Chemical)

As seen from the results shown in the above Tables I to III, it is learned that the rubber composition obtained by the production method of the present invention has the superior processability and the extremely superior chipping resistance.

### INDUSTRIAL APPLICABILITY

As explained above, the rubber composition obtained according to the present invention is extremely useful as a rubber composition for a tire, in particular a rubber composition for a tire tread.

## Claims

1. A method for producing a rubber composition for a tire comprising:
compounding at a first mixing step, into 50 parts by weight or more of 100 parts by weight of a diene-based rubber containing 50 parts by weight or more of natural rubber and/or synthetic polyisoprene rubber and 50 parts by weight or less of a butadiene rubber, 5 to 30 parts by weight of silica and 3 to 15% by weight of a silane coupling agent based upon the weight of the silica with mixing to form a master batch;
then, adding, at a second mixing step, to the resultant master batch, the balance of the diene-based rubber and carbon black and optional compounding agents except for the vulcanization compounding agents; and then,
finally adding thereto, at a final mixing step, the vulcanization compounding agents, with mixing.

2. A method for producing a rubber composition for a tire as claimed in claim 1, further comprising, at the final mixing step, compounding 0.1 to 5.0 parts by weight, based upon 100 parts by weight of the diene-based rubber, of a cross-linking agent for introducing carbon-carbon bonds to the cross-linked structure of the rubber composition to be obtained.
